# EUROPEAN PATENT SPECIFICATION

(11) **EP 2 116 131 B1**
(45) Date of publication and mention of the grant of the patent: **03.11.2010**
(21) Application number: 08172905.5
(22) Date of filing: 24.12.2008
(51) Int. Cl.: A01K 39/02

(54) **Collar for drinking troughs for poultry rearing**
Manschette für Trinktröge für die Geflügelzucht
Collier pour abreuvoirs pour l'élevage de volailles

(30) Priority: 08.04.2008 IT TO20080049 U
(43) Date of publication of application: 11.11.2009
(73) Proprietor: GIORDANO POULTRY-PLAST S.p.A., I-12023 Caraglio (Cuneo) (IT)
(72) Inventor: Giordano, Oscar, 12023 Caraglio (Cuneo) (IT)
(74) Representative: Buzzi, Franco

(56) References cited:
- FR-A- 2 577 756
- "ADVERTISEMENT" POULTRY INTERNATIONAL, WATT PUBLISHING CO, MOUNT MORRIS. ILLINOIS, US, vol. 28, no. 9, 1 September 1989 (1989-09-01), page 12, XP000073009 ISSN: 0032-5767

## Description

The present invention relates to suspended drinking troughs for poultry rearing of the type comprising a bowl provided with two diametrally opposite side supports which are provided for hanging said bowl in an operative condition of the drinking trough.

From FR-A-2577756 a drinking trough for poultry is known, having a single central hanging support and provided with an annular collar mounted in a removable way on its bowl so as to surround it and increase with its peripheral surface the capacity and the extension of the provisioning rim of the drinking trough,

The object of the present invention is to improve operation of drinking troughs of the type indicated above.

Said object is achieved with a collar having the characteristics of Claim 1.

The collar according to the invention enables increase in a very simple and fast way of the capacity and extension of the provisioning rim of drinking troughs of the type indicated above. By "provisioning rim" is here understood the rim of the bowl from which the poultry faces the inside of the bowl to drink.

Thanks to the collar according to the invention it becomes possible to adapt functionality of drinking troughs of the suspended type to the size of the poultry being reared. In particular, it is possible to envisage that once that the poultry being reared, in particular turkeys, has reached a given size, the suspended drinking troughs of a conventional type will be equipped with the collar according to the invention. In this way, the drinking troughs have a greater capacity and a greater extension of the provisioning rim, which facilitate drinking for the turkeys being reared and reduce the amount of water and splashed out and wasted as a result of the latter.

The subject of the present invention is also a suspended drinking trough according to Claim 9.

The invention will now be described in detail with reference to the annexed drawings, which are provided purely by way of non-limiting example, and in which:
- Figure 1 is a schematic perspective view of a drinking trough provided with a collar according to the invention; and
- Figure 2 is a schematic perspective view of the drinking trough and of the collar of Figure 1 uncoupled.

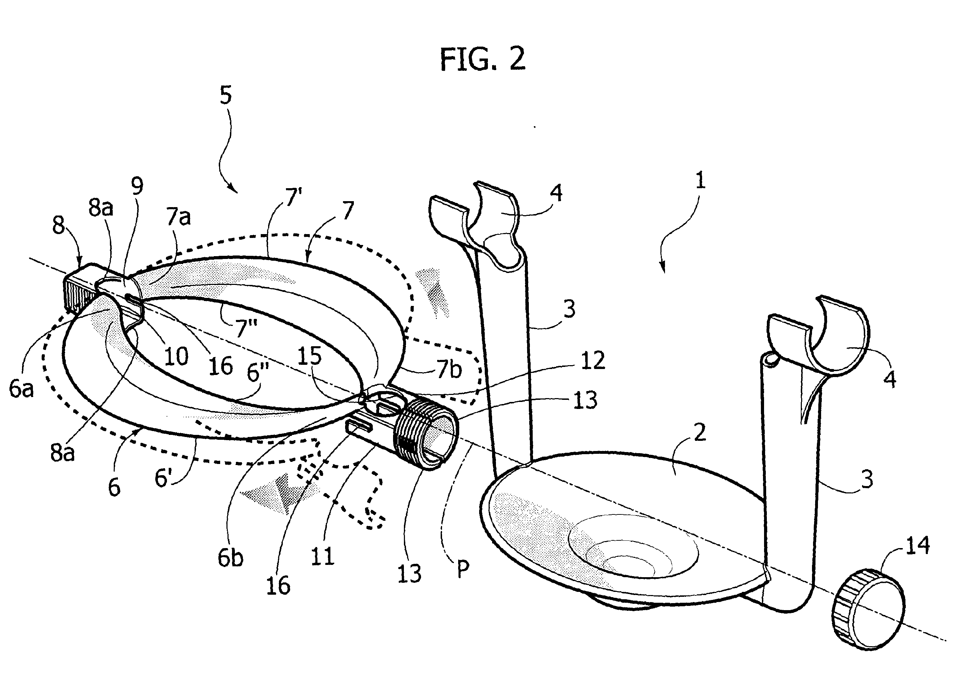

With initial reference to Figure 2, designated by 1 is a suspended drinking trough for poultry rearing of a conventional type. It comprises a bowl 2 provided with diametrally opposite side supports 3, which extend in a transverse direction and upwards with respect to the bottom of the bowl 2. The supports 3 have their distal ends provided with cylindrical half-bands 4, which are elastic so as to enable them to be slotted around a tube for water supply (not shown), from which the drinking trough is thus suspended.

Once again with reference to Figure 2, designated by the number 5 is the collar according to the invention. The collar 5 is formed by two opposed crescent-shaped surfaces 6, 7, connected together at their respective first ends 6a, 7a. Said crescent-shaped surfaces 6, 7 are as a whole concave and are provided with respective top outer edges 6', 7' and bottom inner edges 6", 7".

The first ends 6a, 7a of the crescent-shaped surfaces 6, 7 are connected together via a connection portion 8, which is joined to the ends 6a, 7a in a position corresponding to its flexible side tabs 9, 10.

The flexible tabs 9, 10 of the connection portion 8 enable rotation in mutual recession of the crescent-shaped surfaces 6, 7, in an ideal plane containing the edges 6', 7' of the two crescent-shaped surfaces 6, 7, as schematically indicated (by arrows) in Figure 2. The collar 5 is thus openable at the second ends 6b, 7b of the crescent-shaped surfaces 6, 7, opposite to the ends 6a, 7a. The dashed line of Figure 2 represents the collar 5 in an open condition, which, as will be described more fully hereinafter, enables mounting of the collar on the drinking trough 1.

The second ends 6b, 7b have respective opposed semi-tubular surfaces 11, 12, which extend along the axis of symmetry P of the collar 5 and have longitudinal edges which mate with one another in a plane orthogonal to the aforesaid ideal plane containing the edges 6', 7' of the crescent-shaped surfaces 6, 7. Said opposed semi-tubular surfaces 11, 12 form, when joined together, a tubular portion, which is threaded in a position corresponding to the end 13 and is provided with a hole 15 along an axis substantially orthogonal to the aforesaid ideal plane.

The semi-tubular surfaces 11, 12 can be gripped to one another via an internally threaded plug 14, which engages the threaded end of the semi-tubular surfaces 11, 12, thus gripping also the collar 5.

As may be seen once again in Figure 2, the connection portion 8 and the semi-tubular surfaces 11, 12 have, in a position corresponding to the sides facing the inside of the collar, slits 16 designed to receive corresponding edges of the bowl 2 in a condition where the collar 5 is mounted on the drinking trough 1.

The collar described above can be made of a single piece of plastic material via injection moulding.

In order to carry out assembly of the collar 5 on the drinking trough 1 it is necessary, as mentioned previously, to open the collar 5 (which must be set with the aforesaid ideal plane substantially parallel to the bottom of the bowl 2) setting it in the configuration shown with a dashed line in Figure 2, and arrange it on the drinking trough 1 via a horizontal movement in a direction substantially parallel to the axis of symmetry P of the collar 5. Once the connection portion 8 engages via the edges 8a (visible in Figure 2) the corresponding support 3, the collar 5 is moved into a closing condition in which the support 3 opposite to the one engaged by the connection portion 8, is received inside the hole 15 formed by the two opposed tubular sections 11, 12 joined together. The surfaces 11, 12 are hence gripped together via the plug 14, which ensures a firm connection of the collar 5 to the drinking trough 1.

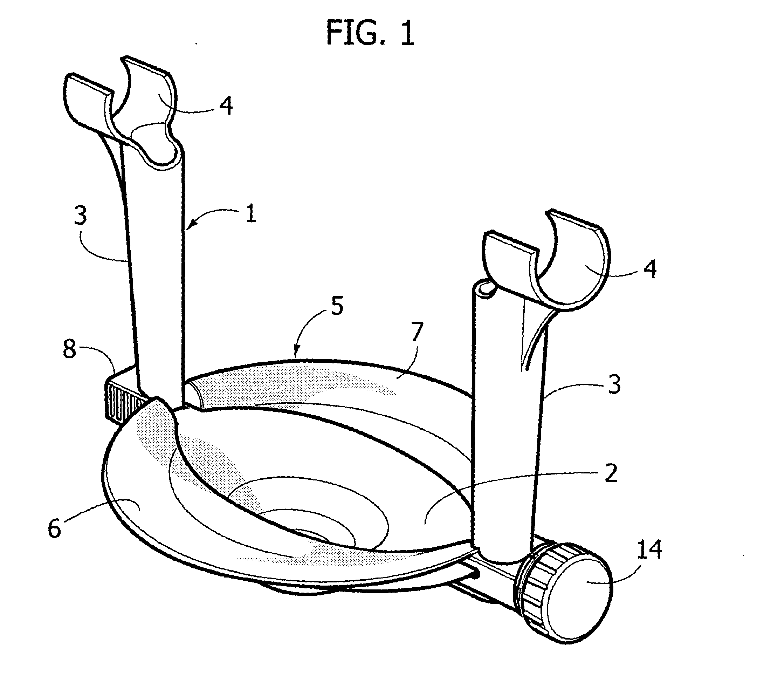

As may be seen more clearly in Figure 1, in the condition where the collar 5 is mounted on the drinking trough 1, the crescent-shaped surfaces 6, 7 assume a position on top the peripheral edge of the bowl 2, which fits within the slits 16 of the connection part 8 and of the semi-tubular surfaces 11, 12. In addition, the crescent-shaped surfaces 6, 7 converge towards the walls of the bowl 2 so as to obtain an overall surface of containment of the drinking trough that is substantially continuous.

From what has been described above, there appears evident the ease of application of a collar according to the invention, which, in an absolutely fast and inexpensive way, enables improvement in operation of a drinking trough of a conventional type. As has already been said previously, in fact, said collar 5 enables increase in the capacity of the drinking trough and extension of its provisioning rim.

An alternative embodiment of the invention can envisage that the crescent-shaped surfaces 6, 7 will be hinged to one another, instead of being elastically connected via the connection portion 8 illustrated above.

Of course, the details of construction and implementation can vary widely with respect to what is described and illustrated herein, without thereby departing from the scope of the present invention, as defined in the ensuing claims.

## Claims

1. A collar (5) for a drinking trough (1) for poultry rearing of the type comprising a bowl (2) provided with two diametrally opposite side supports (3) for hanging said bowl (2) in an operative condition of said drinking trough (1), said collar (5) being intended to be mounted in a removable way on said bowl (2) so as to surround it and increase with its peripheral surface (6, 7), in the condition where the collar (5) is mounted, the capacity and the extension of the provisioning rim of said drinking trough (1), **characterized in that** it is formed by two opposed crescent-shaped surfaces (6, 7) connected together at their respective first ends (6a, 7a), said collar (5) being openable at the second ends (6b, 7b) of said crescent-shaped surfaces and grippable with means (11, 12, 13, 14) for gripping said second ends (6b, 7b).

2. The collar according to Claim 1, **characterized in that** said crescent-shaped surfaces (6, 7) are as a whole concave and provided with respective top outer edges (6', 7') and bottom inner edges (6", 7").

3. The collar according to Claim 1, **characterized in that** said first ends of said crescent-shaped surfaces are connected together via a connection portion (8) provided with flexible tabs (9, 10) that enable opening of said collar.

4. The collar according to Claim 1, **characterized in that** said crescent-shaped surfaces (6, 7) are hinged to one another in a position corresponding to said first ends.

5. The collar according to Claim 1, **characterized in that** said connection portion (8) and said gripping means (11, 12) are designed to engage, in said mounted condition of said collar, on said side supports of said drinking trough, said crescent-shaped surfaces each overlapping opposite rims of said bowl.

6. The collar according to Claim 5, **characterized in that** said second ends (6b, 7b) have respective opposed semi-tubular surfaces (11, 12) that extend along an axis of symmetry (P) of said collar and that form, when joined together, a tubular portion threaded in a region corresponding to the end (13) and provided with a hole (15) along an axis substantially orthogonal to an ideal plane containing said outer edges (6', 7') of the crescent-shaped surfaces (6, 7).

7. The collar according to Claim 6, **characterized in that** said connection part and said semi-tubular surfaces have slits (16), which are set underneath said crescent-shaped surfaces (6, 7) and are designed to receive, in a mounted condition of said collar on said bowl, corresponding edges of said bowl.

8. A drinking trough (1) for poultry rearing comprising a bowl (2) provided with two diametrally opposite side supports (3) designed to hang said bowl (2) in an operative condition of the drinking trough (1), said drinking trough being **characterized in that** it has a collar (5) according to any one of Claims 1 to 7.

## Patentansprüche

1. Manschette (5) für einen Trinktrog (1) für die Geflügelzucht des Typs, der eine Schale (2) enthält, die mit zwei diametral gegenüberliegenden Seitenhalterungen (3) zum Aufhängen der Schale (2) in einem Verwendungszustand des Trinktroges (1) versehen ist, wobei die Manschette (5) abnehmbar an der Schale (2) derart angebracht werden soll, dass sie diese umgibt und mit ihrer Umfangsfläche (6, 7) in dem Zustand, in dem die Manschette (5) angebracht ist, das Fassungsvermögen und die Ausdehnung des Bereitstellungsrandes des Trinktroges (1) vergrößert, **dadurch gekennzeichnet, dass** sie aus zwei gegenüberliegenden sichelförmigen Oberflächen (6, 7) ausgebildet ist, die an ihren jeweiligen ersten Enden (6a, 7a) miteinander verbunden sind, wobei die Manschette (5) an den zweiten Enden (6b, 7b) der sichelförmigen Oberflächen geöffnet und mit Greifeinrichtungen (11, 12, 13, 14) zum Greifen der zweiten Enden (6b, 7b) gegriffen werden kann.

2. Manschette nach Anspruch 1, **dadurch gekennzeichnet, dass** die sichelförmigen Oberflächen (6, 7) insgesamt konkav und mit jeweiligen oberen Außenrändern (6', 7') und unteren Innenrändern (6", 7") versehen sind.

3. Manschette nach Anspruch 1, **dadurch gekennzeichnet, dass** die ersten Enden der sichelförmigen Oberflächen über einen Verbindungsabschnitt (8) verbunden sind, der mit flexiblen Lappen (9, 10) versehen ist, die ein Öffnen der Manschette gestatten.

4. Manschette nach Anspruch 1, **dadurch gekennzeichnet, dass** die sichelförmigen Oberflächen (6, 7) an einer Stelle, die den ersten Enden entspricht, gelenkig miteinander verbunden sind.

5. Manschette nach Anspruch 1, **dadurch gekennzeichnet, dass** der Verbindungsabschnitt (8) und die Greifeinrichtungen (11, 12) dazu eingerichtet sind, in dem angebrachten Zustand der Manschette mit den Seitenhalterungen des Trinktroges in Eingriff zu gelangen, wobei die sichelförmigen Oberflächen gegenüberliegende Ränder der Schale jeweils überlappen.

6. Manschette nach Anspruch 5, **dadurch gekennzeichnet, dass** die zweiten Enden (6b, 7b) entsprechende gegenüberliegende halbrohrförmige Oberflächen (11, 12) aufweisen, die sich entlang einer Symmetrieachse (P) der Manschette erstrecken und, wenn sie miteinander verbunden sind, einen röhrenförmigen Abschnitt ausbilden, der in einem Bereich, der dem Ende (13) entspricht, ein Gewinde aufweist und mit einem Loch (15) entlang einer Achse versehen ist, die im wesentlichen orthogonal zu einer idealen Ebene verläuft, die die Außenränder (6', 7') der sichelförmigen Oberflächen (6, 7) enthält.

7. Manschette nach Anspruch 6, **dadurch gekennzeichnet, dass** der Verbindungsteil und die halbrohrförmigen Oberflächen Schlitze (16) aufweisen, die unter den sichelförmigen Oberflächen (6, 7) angeordnet und dazu bestimmt sind, in einem angebrachten Zustand der Manschette an der Schale entsprechende Ränder der Schale aufzunehmen.

8. Trinktrog (1) für die Geflügelzucht, enthaltend eine Schale (2), die mit zwei diametral gegenüberliegenden Seitenhalterungen (3) versehen ist, die dazu eingerichtet sind, die Schale (2) in einem Verwendungszustand des Trinktroges (1) aufzuhängen, wobei der Trinktrog **dadurch gekennzeichnet ist, dass** er eine Manschette (5) nach einem der Ansprüche 1 bis 7 hat.

## Revendications

1. Collier (5) pour un abreuvoir (1) pour l'élevage de la volaille, du type comprenant un bol (2) prévu avec deux supports latéraux diamétralement opposés (3) pour suspendre ledit bol (2) dans une condition opérationnelle dudit abreuvoir (1), ledit collier (5) étant prévu pour être monté d'une manière amovible sur ledit bol (2) afin de l'entourer et d'augmenter avec sa surface périphérique (6, 7), dans la condition dans laquelle le collier (5) est monté, la capacité et l'extension du bord d'approvisionnement dudit abreuvoir (1), **caractérisé en ce qu'**il est formé par deux surfaces en forme de croissant opposées (6, 7) raccordées ensemble au niveau de leurs premières extrémités (6a, 7a) respectives, ledit collier (5) pouvant s'ouvrir au niveau des deuxièmes extrémités (6b, 7b) desdites surfaces en forme de croissant et pouvant être saisies avec des moyens (11, 12, 13, 14) pour saisir lesdites deuxièmes extrémités (6b, 7b).

2. Collier selon la revendication 1, **caractérisé en ce que** lesdites surfaces en forme de croissant (6, 7) sont, dans l'ensemble, concaves et prévues avec des bords externes supérieurs (6', 7') et des bords internes inférieurs (6", 7") respectifs.

3. Collier selon la revendication 1, **caractérisé en ce que** lesdites premières extrémités desdites surfaces en forme de croissant sont raccordées ensemble à l'aide d'une partie de raccordement (8) prévue avec des languettes flexibles (9, 10) qui permettent d'ouvrir ledit collier.

4. Collier selon la revendication 1, **caractérisé en ce que** lesdites surfaces en forme de croissant (6, 7) sont articulées entre elles dans une position correspondant auxdites premières extrémités.

5. Collier selon la revendication 1, **caractérisé en ce que** ladite partie de raccordement (8) et lesdits moyens de préhension (11, 12) sont conçus pour mettre en prise, dans ladite condition montée dudit collier, sur lesdits supports latéraux dudit abreuvoir, lesdites surfaces en forme de croissant qui chevauchent chacune sur les bords opposés dudit bol.

6. Collier selon la revendication 5, **caractérisé en ce que** lesdites deuxièmes extrémités (6b, 7b) ont des surfaces semi-tubulaires opposées (11, 12) respectives qui s'étendent le long d'une axe de symétrie (P) dudit collier et qui forment, lorsqu'elles sont assemblées une partie tubulaire filetée dans une région correspondant à l'extrémité (13) et prévue avec un trou (15) le long d'un axe sensiblement orthogonal à un plan idéal contenant lesdits bords externes (6', 7') des surfaces en forme de croissant (6, 7).

7. Collier selon la revendication 6, **caractérisé en ce que** ladite partie de raccordement et lesdites surfaces semi-tubulaires ont des fentes (16), qui sont placées au-dessous desdites surfaces en forme de croissant (6, 7) et sont conçues pour recevoir, dans une condition montée dudit collier sur ledit bol, des bords correspondants dudit bol.

8. Abreuvoir (1) pour l'élevage de la volaille comprenant un bol (2) prévu avec deux supports latéraux diamétralement opposés (3) conçus pour suspendre ledit bol (2) dans une condition opérationnelle de l'abreuvoir (1), ledit abreuvoir étant **caractérisé en ce qu'**il a un collier (5) selon l'une quelconque des revendications 1 à 7.
